# EUROPEAN PATENT SPECIFICATION

(11) **EP 1 578 862 B1**
(45) Date of publication and mention of the grant of the patent: **12.07.2006**
(21) Application number: 03789163.7
(22) Date of filing: 06.12.2003
(51) Int. Cl.: C08L 23/04, C08F 297/08

(54) **POLYETHYLENE BLOW MOULDING COMPOSITION FOR PRODUCING JERRY CANS**
POLYETHYLEN-GIESSZUSAMMENSETZUNG ZUM HERSTELLEN VON BEHÄLTER DURCH BLASFORMEN UND DAMIT PRODUZIERTE KANISTER
COMPOSITION DE MOULAGE PAR SOUFFLAGE DE POLYETHYLENE POUR LA PRODUCTION DE BIDONS

(30) Priority: 24.12.2002 DE 10261066; 05.02.2003 US 445163 P
(43) Date of publication of application: 28.09.2005
(73) Proprietor: Basell Polyolefine GmbH, 50389 Wesseling (DE)
(72) Inventor: BERTHOLD, Joachim, 65779 Kelkheim (DE); BÖHM, Ludwig, 65795 Hattersheim (DE); KRÜMPEL, Peter, 65520 Bad Camberg (DE); MANTEL, Rainer, 68165 Mannheim (DE)
(86) International application number: PCT/EP2003/013867
(87) International publication number: WO 2004/058876

(56) References cited:
- EP-A- 0 603 935
- DE-A- 19 945 980
- US-A- 4 336 352
- US-A- 4 536 550
- US-B1- 6 242 548

## Description

The present invention relates to a polyethylene composition with multimodal molecular mass distribution, which is particularly suitable for blow moulding of canisters with a capacity in the range from 2 to 20 dm³ (I) (jerry cans), and to a process for preparing this polyethylene composition in the presence of a catalytic system composed of a Ziegler catalyst and a co-catalyst, by way of a multistage reaction process composed of successive slurry polymerizations. The invention further relates to the canisters produced from the molding composition by blow moulding.

Polyethylene is widely used for producing blow mouldings of all types requiring a material with particularly high mechanical strength, high corrosion resistance, and absolutely reliable long-term stability. Another particular advantage of polyethylene is that it also has good chemical resistance and is intrinsically a lightweight material.

EP-A-603,935 has previously described a blow moulding composition based on polyethylene having a bimodal molecular mass distribution, which is suitable for the production of mouldings with good mechanical properties.

US-A 5,338,589 describes a material with even broader molecular mass distribution, prepared using a high-mileage catalyst known from WO 91/18934, in which the magnesium alcoholate is used in the form of a gel-like suspension. Surprisingly, it has been found that the use of this material in mouldings, in particular in pipes, permits simultaneous improvement in properties which are usually contrary correlated in semicrystalline thermoplastics, these being stiffness and creep on the one hand and stress-crack resistance and toughness on the other hand.

However, the known bimodal products in particular have relatively low melt strength during processing. This means that the extruded parison frequently break in the molten state, making the extrusion process unacceptably sensitive to processing. In addition, especially when thick-walled containers are being produced, the wall thickness is found to be non-uniform, due to flow of the melt from upper regions into lower regions.

It is an objective of the present invention, therefore, to develop a polyethylene composition for blow moulding which can give a further improvement over all of the known materials in processing by blow moulding to canisters. In particular, the high melt strength of the moulding composition permits to run an extrusion process without parison disruption over a long time period, and the precisely adjusted swell ratio index of the composition permits optimization of wall-thickness control.

We have found that this objective is achieved by a composition as mentioned at the outset, the characterizing features of which are that it comprises from 40 to 50 % by weight of a low-molecular-mass ethylene homopolymer A, from 25 to 35 % by weight of a high-molecular-mass copolymer B made from ethylene and from another 1-olefin having from 4 to 8 carbon atoms, and from 24 to 28 % by weight of an ultrahigh-molecular-mass ethylene-1-olefin copolymer C, where all of the percentage data are based on the total weight of the composition.

The invention also relates to a process for preparing this composition in a cascaded slurry polymerization and to a process for producing, from this composition, canisters with a capacity in the range from 2 to 20 dm³ (I) and with quite excellent mechanical strength properties.

The polyethylene composition of the invention has a density in the range from 0.950 to 0.958 g/cm³ at 23 °C, and a broad trimodal molecular mass distribution. The high-molecular-mass copolymer B contains only small proportions of other olefin monomer units having from 4 to 8 carbon atoms, namely from 0.2 to 0.5 % by weight. Examples of these comonomers are 1-butene, 1-pentene, 1-hexene, 1-octene, or 4-methyl-1-pentene. The ultrahigh-molecular-mass ethylene homo- or copolymer C also contains an amount in the range from 1 to 2 % by weight of one or more of the above mentioned comonomers.

The composition of the invention has a melt flow index ISO 1133 in the range of from 0.30 to 0.50 dg/min, expressed in terms of MFR_{190/5}, and a viscosity number VNₜₒₜ in the range of from 330 to 380 cm³/g, in particular from 340 to 370 cm³/g, measured according to ISO/R 1191 in decalin at 135 °C.

The trimodality is a measure of the position of the centers of gravity of the three individual molecular mass distributions, and can be described with the aid of the viscosity number VN to ISO/R 1191 of the polymers formed in the successive polymerization stages. The relevant band widths for the polymers formed in each of the stages of the reaction are therefore as follows:

The viscosity number VN₁ measured on the polymer after the first polymerization stage is identical with the viscosity number VN_{A} of the low-molecular-mass polyethylene A and according to the invention is in the range from 60 to 80 cm³/g.

The viscosity number VN₂ measured on the polymer after the second polymerization stage is not equal to VN_{B} of the high-molecular-mass polyethylene B formed in the second polymerization stage, which can only be determined by calculation, but represents the viscosity number of the mixture of polymer A and polymer B. According to the invention, VN₂ is in the range from 160 to 200 cm³/g.

The viscosity number VN₃ measured on the polymer after the third polymerization stage is not equal to VN_{C} of the ultra-high-molecular-mass copolymer C formed in the third polymerization stage, which can only be determined by calculation, but represents the viscosity number of the mixture of polymer A, polymer B, and polymer C. According to the invention, VN₃ is in the range of from 330 to 380 cm³/g, in particular from 350 to 370 cm³/g.

The polyethylene is obtained by polymerizing the monomers in slurry in the range of from 70 to 90 °C, preferably from 80 to 90 °C, at a pressure in the range of from 0.15 to 1 MPa, and in the presence of a high-mileage Ziegler catalyst composed of a transition metal compound and of an organoaluminum compound such as triethylaluminum, triisobutylaluminum, alkylaluminum-chlorides or alkylaluminumhydrides. The polymerization is conducted in three stages, i.e. in three stages arranged in series, each molecular mass being regulated with the aid of hydrogen feed.

The polyethylene composition of the invention may comprise other additives alongside the polyethylene. Examples of these additives are heat stabilizers, antioxidants, UV absorbers, light stabilizers, metal deactivators, compounds which destroy peroxide, and basic costabilizers in amounts of from 0 to 10 % by weight, preferably from 0 to 5 % by weight, and also fillers, reinforcing agents, plasticizers, lubricants, emulsifiers, pigments, optical brighteners, flame retardants, antistats, blowing agents, or a combination of these, in total amounts of from 0 to 50 % by weight, based on the total weight of the mixture.

The composition of the invention is particularly suitable for the blow moulding process to produce canisters, by first plastifying the polyethylene composition in an extruder in the range from 200 to 250 °C and then extruding it through a die into a mould, where it is cooled and solidified.

The composition of the invention gives particularly good processing behavior in the blow moulding process to give canisters because it has a swell ratio index in the range of from 130 to 145 %, and the canisters produced therewith have particularly high mechanical strength because the moulding composition of the invention has a notched impact strength (ISO) in the range from 14 to 17 kJ/m². The stress-crack resistance (FNCT) is in the range from 150 to 220 h.

The notched impact strength_{ISO} is measured according to ISO 179-1/1eA / DIN 53453 at 23 °C. The size of the specimen is 10 x 4 x 80 mm, and a V notch is inserted using an angle of 45°, with a depth of 2 mm and with a notch base radius of 0.25 mm.

The stress-crack resistance of the molding composition of the invention is determined by an internal test method and is given in h. This laboratory method is described by M. Fleißner in Kunststoffe 77 (1987), pp. 45 et seq., and corresponds to ISO/FDIS 16770, which has since come into force. In ethylene glycol as stress-crack-promoting medium at 80°C with a tensile stress of 3.5 MPa, the time to failure is shortened due to the shortening of the stress-initiation time by the notch (1.6 mm/razorblade). The specimens are produced by sawing out three specimens of dimensions 10 x 10 x 90 mm from a pressed plaque of thickness 10 mm. These specimens are provided with a central notch, using a razorblade in a notching device specifically manufactured for the purpose (see Figure 5 in the publication). The notch depth is 1.6 mm.

### Example 1

Ethylene was polymerized in a continuous process in three reactors arranged in series. An amount of 1.3 Mol/h related to the titanium compound of a Ziegler catalyst prepared as specified in WO 91/18934, Example 2, and having the operative number 2.2 in the WO, was fed into the first reactor together with 2.7 Mol/h triethylaluminum, as well as sufficient amounts of diluent (hexane), ethylene, and hydrogen. The amount of ethylene (= 6.75 t/h) and the amount of hydrogen (= 7.3 kg/h) were adjusted so that the percentage proportion of ethylene and of hydrogen measured in the gas phase of the first reactor were 18 % by volume and 70 % by volume, respectively, and the rest was a mix of nitrogen and vaporized diluent.

The polymerization in the first reactor was carried out at 84 °C.

The slurry from the first reactor was then transferred into a second reactor, in which the percentage proportion of hydrogen in the gas phase had been reduced between 10 to 12 % by volume, and an amount of 16.6 kg/h of 1-butene was added to this reactor alongside 4.35 t/h of ethylene. The amount of hydrogen was reduced by way of intermediate H₂ depressurization. 70 % by volume of ethylene, 10.5 % by volume of hydrogen, and 1.1 % by volume of 1-butene were measured in the gas phase of the second reactor, the rest being a mix of nitrogen and vaporized diluent.

The polymerization in the second reactor was carried out at 82 °C.

The slurry from the second reactor was transferred to the third reactor using further intermediate H₂ depressurization to adjust the amount of hydrogen to 0.5 % by volume in the gas phase of the third reactor.

An amount of 67 kg/h of 1-butene was added to the third reactor alongside an amount of 3.90 t/h of ethylene. A percentage proportion of from 85 % by volume of ethylene, 0.5 % by volume of hydrogen, and 2.2 % by volume of 1-butene was measured in the gas phase of the third reactor, the rest being a mix of nitrogen and vaporized diluent.

The polymerization in the third reactor was carried out at 80 °C.

The long-term polymerization catalyst activity required for the cascaded process described above was provided by a specifically developed Ziegler catalyst as described in the WO mentioned at the outset. A measure of the usefulness of this catalyst is its extremely high hydrogen sensitivity and its uniformly high activity over a long time period of between 1 to 8 h.

The diluent was removed from the polymer slurry leaving the third reactor, and the material was dried and then pelletized.

Table 1 shown below gives the viscosity numbers and quantitative proportions w_{A}, w_{B}, and w_{C} of polymer A, B, and C for the polyethylene moulding composition prepared in Example 1.

**Table 1**

| | |
|---|---|
| Example No. | 1 |
| density [g/cm³] | 0.954 |
| MFR_{190/5} [dg/min] | 0.40 |
| W_{A} [% by weight] | 45 |
| W_{B} [% by weight] | 29 |
| W_{C} [% by weight] | 26 |
| VN₁ [cm³/g] | 70 |
| VN₂ [cm³/g] | 180 |
| VNₜₒₜ [cm³/g] | 360 |
| SR [%] | 135 |
| FNCT [h] | 170 |
| NIS_{ISO} [kJ/m²] | 16 |

The abbreviations for physical properties in Table 1 have the following meanings:
- SR (= swell ratio) in [%] measured in a high-pressure capillary rheometer at a shear rate of 1440 s⁻¹, in a 2/2 round-section die with conical inlet (angle = 15°) at 190 °C.
- FNCT = stress-crack resistance (Full Notch Creep Test) tested using the internal test method of M. Fleißner, in [h],
- NIS_{ISO} = notched impact strength measured to ISO 179-1/1eA / DIN 53453 in [kJ/m²] at 23 °C.

## Claims

1. A polyethylene moulding composition with multimodal molecular mass distribution, which has a density in the range of from 0.950 to 0.958 g/cm³ at 23 °C and an MFR_{190/5} in the range of from 0.30 to 0.50 dg/min, and which comprises from 40 to 50 % by weight of a low-molecular-mass ethylene homopolymer A, from 25 to 35 % by weight of a high-molecular-mass copolymer B made from ethylene and from another 1-olefin having from 4 to 8 carbon atoms, and from 24 to 28 % by weight of an ultrahigh-molecular-mass ethylene copolymer C, wherein all of the percentage data are based on the total weight of the moulding composition.

2. A polyethylene composition as claimed in claim 1, wherein the high-molecular-mass copolymer B contains small proportions of from 0.2 to 0.5 % by weight of co-monomer having from 4 to 8 carbon atoms, based on the weight of copolymer B, and wherein the ultrahigh-molecular-mass ethylene copolymer C contains an amount in the range from 1 to 2 % by weight of comonomers, based on the weight of copolymer C.

3. A polyethylene composition as claimed in claim 1 or 2, which, as co-monomer, contains 1-butene, 1-pentene, 1-hexene, 1-octene, 4-methyl-1-pentene, or a mixture of these.

4. A polyethylene composition as claimed in one or more of claims 1 to 3, which has a viscosity number VNₜₒₜ of from 330 to 380 cm³/g, preferably from 340 to 370 cm³/g, measured to ISO/R 1191 in decalin at 135 °C.

5. A polyethylene composition as claimed in one or more of claims 1 to 4, which has a swell ratio in the range of from 130 to 145 %, and a notched impact strength (ISO) in the range of from 14 to 17 kJ/m², and a stress-crack resistance (FNCT) in the range of from 150 to 220 h.

6. A process for producing a polyethylene composition as claimed in one or more of claims 1 to 5, in which the monomers are polymerized in suspension at a temperature in the range of from 20 to 120 °C, at a pressure in the range of from 0.15 to 1 MPa, and in the presence of a high-mileage Ziegler catalyst composed of a transition metal compound and of an organoaluminum compound, which comprises conducting polymerization in three stages, where the molecular mass of the polyethylene prepared in each stage is regulated with the aid of hydrogen.

7. A process as claimed in claim 6, wherein the hydrogen concentration in the first polymerization stage is adjusted so that the viscosity number VN₁ of the low-molecular-mass polyethylene A is in the range from 60 to 80 cm³/g.

8. A process as claimed in claim 6 or 7, wherein the hydrogen concentration in the second polymerization stage is adjusted so that the viscosity number VN₂ of the mixture of polymer A and polymer B is in the range from 160 to 200 cm³/g.

9. A process as claimed in any of claims 6 to 8, wherein the hydrogen concentration in the third polymerization stage is adjusted so that the viscosity number VN₃ of the mixture of polymer A, polymer B, and polymer C is in the range of from 330 to 380 cm³/g, in particular of from 340 to 370 cm³/g.

10. The use of a polyethylene composition as claimed in one or more of claims 1 to 5 for producing canisters with a capacity in the range from 2 to 20 dm³ (I), where the polyethylene composition is first plasticized in an extruder in the range from 200 to 250 °C and is then extruded through a die into a mould, where it is first blown up and then cooled and solidified.

## Patentansprüche

1. Polyethylen Formmasse mit multimodaler Molmassenverteilung, die eine Dichte bei einer Temperatur von 23 °C im Bereich von 0,950 bis 0,958 g/cm³ besitzt und einen MFI_{190/5} im Bereich von 0,30 bis 0,50 dg/min und die 40 bis 50 Gew.-% eines niedermolekularen Ethylen-homopolymers A, 25 bis 35 Gew.-% eines hochmolekularen Copolymers B aus Ethylen und einem anderen 1-Olefin mit 4 bis 8 C-Atomen und 24 bis 28 Gew.-% eines ultrahochmolekularen Ethylencopolymers C enthält, wobei alle Prozentangaben bezogen sind auf das Gesamtgewicht der Formmasse.

2. Polyethylen Formmasse nach Anspruch 1, **dadurch gekennzeichnet, dass** das hochmolekulare Copolymer B geringe Anteile an Comonomer mit 4 bis 8 C-Atomen von 0,2 bis 0,5 Gew.-% enthält, bezogen auf das Gewicht an Copolymer B, und dass das ultrahochmolekulare Ethylencopolymer C Comonomere in einer Menge im Bereich von 1 bis 2 Gew.-% enthält, bezogen auf das Gewicht von Copolymer C.

3. Polyethylen Formmasse nach Anspruch 1 oder 2, **dadurch gekennzeichnet, dass** sie als Comonomer 1-Buten, 1-Penten, 1-Hexen, 1-Octen, 4-Methylpenten-1 oder Mischungen von diesen enthält.

4. Polyethylen Formmasse nach einem oder nach mehreren der Ansprüche 1 bis 3, **dadurch gekennzeichnet, dass** sie eine Viskositätszahl VZ_{ges}, gemessen nach ISO/R 1191 in Dekalin bei einer Temperatur von 135 °C, im Bereich von 330 bis 380 cm³/g besitzt, vorzugsweise von 340 bis 370 cm³/g.

5. Polyethylen Formmasse nach einem oder nach mehreren der Ansprüche 1 bis 4, **dadurch gekennzeichnet, dass** sie eine Schwellrate im Bereich von 130 bis 145 % besitzt, dass sie eine Kerbschlagzähigkeit (ISO) im Bereich von 14 bis 17 kJ/m² besitzt und dass sie eine Spannungsrissfestigkeit (FNCT) im Bereich von 150 bis 220 h besitzt.

6. Verfahren zum Herstellen einer Polyethylen Formmasse nach einem oder nach mehreren der Ansprüche 1 bis 5, bei dem die Polymerisation der Monomeren in Suspension bei Temperaturen im Bereich von 20 bis 120 °C, einem Druck im Bereich von 0,15 bis 1 MPa und in Gegenwart eines hochaktiven Ziegler-Katalysators durchgeführt wird, der aus einer Übergangsmetallverbindung und einer aluminiumorganischen Verbindung zusammengesetzt ist, **dadurch gekennzeichnet, dass** die Polymerisation dreistufig geführt wird, wobei die Molmasse des in jeder Stufe hergestellten Polyethylens jeweils mit Hilfe von Wasserstoff geregelt wird.

7. Verfahren nach Anspruch 6, **dadurch gekennzeichnet, dass** in der ersten Polymerisationsstufe die Wasserstoffkonzentration so eingestellt wird, dass die Viskositätszahl VZ₁ des niedermolekularen Polyethylens A im Bereich von 60 bis 80 cm³/g liegt.

8. Verfahren nach Anspruch 6 oder 7, **dadurch gekennzeichnet, dass** in der zweiten Polymerisationsstufe die Wasserstoffkonzentration so eingestellt wird, dass die Viskositätszahl VZ₂ des Gemisches aus Polymer A plus Polymer B im Bereich von 160 bis 200 cm³/g liegt.

9. Verfahren nach einem der Ansprüche 6 bis 8, **dadurch gekennzeichnet, dass** in der dritten Polymerisationsstufe die Wasserstoffkonzentration so eingestellt wird, dass die Viskositätszahl VZ₃ des Gemisches aus Polymer A, Polymer B plus Polymer C im Bereich von 330 bis 380 cm³/g liegt, insbesondere von 340 bis 370 cm³/g.

10. Verwendung einer Polyethylen Formmasse nach einem oder nach mehreren der Ansprüche 1 bis 5 zur Herstellung von Kanistern mit einem Inhalt im Bereich von 2 bis 20 dm³ (1), wobei die Polyethylen Formmasse zunächst in einem Extruder bei Temperaturen im Bereich von 200 bis 250 °C plastifiziert und dann durch eine Düse in eine Blasform gepreßt und dort abgekühlt und verfestigt wird.

## Revendications

1. Composition de moulage de polyéthylène ayant une distribution de masse moléculaire multimodale, qui a une densité dans le domaine de 0,950 à 0,958 g/cm³ à 23°C et un MFR_{190/5} dans le domaine de 0,30 à 0,50 dg/min, et qui comporte de 40 à 50 % en poids d'un homopolymère A d'éthylène de masse moléculaire basse, de 25 à 35 % en poids d'un copolymère B de masse moléculaire haute constitué d'éthylène et d'une autre 1-oléfine ayant de 4 à 8 atomes de carbone, et de 24 à 28 % en poids d'un copolymère C d'éthylène de masse moléculaire ultra-haute, dans laquelle la totalité des données en pourcentage sont basées sur le poids total de la composition de moulage.

2. Composition de polyéthylène selon la revendication 1, dans laquelle le copolymère B de masse moléculaire haut contient de petites proportions de 0,2 à 0,5 % en poids de comonomère ayant de 4 à 8 atomes de carbone, sur la base du poids du copolymère B, et dans laquelle le copolymère C d'éthylène de masse moléculaire ultra-haute contient une quantité dans le domaine de 1 à 2 % en poids de comonomères, sur la base du poids du copolymère C.

3. Composition de polyéthylène selon la revendication 1 ou 2, qui, en tant que comonomère, contient du 1-butène, du 1-pentène, du 1-hexene, du 1-octène, du 4-méthyl-1-pentène, ou un mélange de ceux-ci.

4. Composition de polyéthylène selon l'une ou plus des revendications 1 à 3, qui a un indice de viscosité VNₜₒₜ de 330 à 380 cm³/g, de préférence de 340 à 370 cm³/g, mesuré conformément à ISO/R 1191 dans de la décaline à 135°C.

5. Composition de polyéthylène selon l'une ou plus des revendications 1 à 4, qui a un taux de gonflement dans le domaine de 130 à 145 %, et une résistance aux chocs à l'entaille (ISO) dans le domaine de 14 à 17 kJ/m², et une résistance à la fissuration sous contrainte (FNCT) dans le domaine de 150 à 220 h.

6. Procédé pour produire une composition de polyéthylène selon l'une ou plus des revendications 1 à 5, dans lequel les monomères sont polymérisés en suspension à une température dans le domaine de 20 à 120°C à une pression dans la plage de 0,15 à 1 MPa, et en présence d'un catalyseur de Ziegler à activité élevée constitué d'un composé de métal de transition et d'un composé organo-aluminium, qui comprend la mise en oeuvre de la polymérisation en trois étapes, la masse moléculaire du polyéthylène préparé à chaque étape étant régulée à l'aide d'hydrogène.

7. Procédé selon la revendication 6, dans lequel la concentration en hydrogène dans la première étape de polymérisation est ajustée de sorte que l'indice de viscosité VN₁ du polyéthylène A de masse moléculaire basse se trouve dans le domaine de 60 à 80 cm³/g.

8. Procédé selon la revendication 6 ou 7, dans lequel la concentration en hydrogène dans la deuxième étape de polymérisation est ajustée de sorte que l'indice de viscosité VN₂ du mélange constitué du polymère A et du polymère B se trouve dans le domaine de 160 à 200 cm³/g.

9. Procédé selon l'une quelconque des revendications 6 à 8, dans lequel la concentration en hydrogène dans la troisième étape de polymérisation est ajustée de sorte que l'indice de viscosité VN₃ du mélange constitué du polymère A, du polymère B et du polymère C se trouve dans le domaine de 330 à 38.0 cm³/g, en particulier de 340 à 370 cm³/g.

10. Utilisation d'une composition de polyéthylène selon l'une ou plus des revendications 1 à 5, pour produire des bidons ayant une capacité dans le domaine de 2 à 20 dm³ (1), où la composition de polyéthylène est tout d'abord plastifiée dans une extrudeuse dans le domaine de température de 200 à 250°C et est ensuite extrudée à travers une filière dans un moule, où elle est tout d'abord soufflée et ensuite refroidie et solidifiée.
